Europäisches Patentamt

European Patent Office

Office européen des brevets

(19)

(11) EP 1 395 464 B1

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(21) Anmeldenummer: 02740380.7

(22) Anmeldetag: **25.05.2002**

(51) Int Cl.⁷: **B60R 21/01**

(86) Internationale Anmeldenummer:
**PCT/DE2002/001925**

(87) Internationale Veröffentlichungsnummer:
**WO 2002/096719 (05.12.2002 Gazette 2002/49)**

(54) **ANORDNUNG ZUR DRAHTLOSEN INFORMATIONS- UND/ODER ENERGIEÜBERTRAGUNG ZWISCHEN EINEM HERAUSNEHMBAREN FAHRZEUGSITZ UND DER FAHRZEUGKAROSSERIE**

SYSTEM FOR THE WIRELESS TRANSMISSION OF INFORMATION AND/OR ENERGY BETWEEN A REMOVABLE VEHICLE SEAT AND THE VEHICLE BODY

SYSTEME POUR LA TRANSMISSION SANS FIL D'INFORMATIONS ET/OU D'ENERGIE ENTRE UN SIEGE DE VEHICULE AMOVIBLE ET LA CARROSSERIE DU VEHICULE

(84) Benannte Vertragsstaaten:
**AT BE CH CY DE DK ES FI FR GB GR IE IT LI LU MC NL PT SE TR**

(30) Priorität: **30.05.2001 DE 10126191**

(43) Veröffentlichungstag der Anmeldung:
**10.03.2004 Patentblatt 2004/11**

(73) Patentinhaber: **ROBERT BOSCH GMBH**
**70442 Stuttgart (DE)**

(72) Erfinder:
• **SCHIRMER, Juergen**
  **69124 Heidelberg (DE)**
• **KAZMIERCZAK, Harald**
  **71717 Beilstein (DE)**

(56) Entgegenhaltungen:
**WO-A-01/25056          DE-A- 19 614 161**
**DE-A- 19 740 732        US-A- 5 696 409**

**Beschreibung**

Stand der Technik

Die Erfindung geht aus von einer Anordnung zur drahtlosen Informations- und/oder Energieübertragung zwischen einem herausnehmbaren Fahrzeugsitz und der Fahrzeugkarosserie nach der Gattung des unabhängigen Patentanspruchs.

Es ist bereits bekannt, einen induktiven Übertrager zur Energie- und/oder Informationsübertragung zwischen der Fahrzeugkarosserie und einem herausnehmbaren Fahrzeugsitz zu verwenden. In einem herausnehmbaren Fahrzeugsitz können insbesondere Rückhaltemittel und Sensorik angeordnet sein, die mit elektrischer Energie und Daten versorgt werden müssen. Darüber hinaus werden diese elektrischen Anordnungen, auch Daten, zurück zur Fahrzeugkarosserie übertragen. Bei Rückhaltemitteln sind dies insbesondere Diagnosedaten. Ein solch induktiver Übertrager weist eine Primärseite in der Fahrzeugkarosserie und eine Sekundärseite in einem herausnehmbaren Sitz auf. Diese induktiven Übertrager sind vorzugsweise rotationssymmetrisch mit ferromagnetischen Halbschalen und Spulen, die darauf gewickelt sind, ausgebildet.

Aus US-A 5,696,409 ist eine Vorrichtung zur Energie- und Datenübertragung zwischen einer Fahrzeugkarosserie und einem Fahrzeugsitz bekannt. Dabei ist primärseitig eine Schaltung vorgesehen, die die Präsenz der Sekundärseite erkennt.

Die in der US A 5 696 409 bekanntgewordenen Merkmale formen den Oberbegriff des Anspruch 1.

Vorteile der Erfindung

Die erfindungsgemäße Anordnung zur drahtlosen Inforrnations- und/oder Energieübertragung zwischen einem herausnehmbaren Fahrzeugsitz und der Fahrzeugkarosserie mit den Merkmalen des unabhängigen Patentanspruchs hat gegenüber dem Stand der Technik Vorteile.

Durch die in den abhängigen Ansprüchen aufgeführten Maßnahmen und Weiterbildungen sind vorteilhafte Verbesserungen der im unabhängigen Patentanspruch angegebenen Anordnung zur drahtlosen Informations- und/oder Energieübertragung zwischen einem herausnehmbaren Fahrzeugsitz und der Fahrzeugkarosserie möglich.

Besonders vorteilhaft ist, dass die Induktivität mittels eines Schwingkreises gemessen wird, bei dem die Frequenz der abklingenden Schwingung zur Berechnung der Induktivität dient, da die anderen Elemente des Schwingkreises, also insbesondere die Kapazität, bekannt sind, wobei zunächst der Kondensator des Schwingkreises aufgeladen war und die Energie für die Schwingungen liefert. Durch die Verwendung der allgemein bekannten Thomsonschen Schwingungsformel ist dann die Berechnung der Induktivität möglich. Die Induktivität wird dann weiter elektronisch ausgewertet, gegebenenfalls unter Zuhilfenahme eines Prozessors. Es wird damit die Induktivität der Wicklung auf der Primärseite gemessen. Durch die Kopplung der Primärseite mit der Sekundärseite wird zwischen Ein- und Ausbau des Fahrzeugsitzes eine unterschiedliche Induktivität primärseitig messbar sein. Zur Ermittlung der Periode der Spannung in dem Schwingkreis wird vorteilhafter Weise ein Komparator verwendet, dessen Ausgangssignal dann einem Zähler zugeführt wird.

Weiterhin ist es von Vorteil, dass zur Messung der sekundärseitigen Impedanz primärseitig im eingebauten Zustand eine Anordnung aus einem Generator, einem Widerstand und einem Kondensator mit der Wicklung der Primärseite in Reihe geschaltet wird, um dann über die Spannung, die über dem Widerstand oder dem Kondensator abfällt, die sekundärseitige Impedanz und insbesondere den Realteil dieser Impedanz zu bestimmen. Hiermit wird eine Überprüfung der Funktionsfähigkeit des Zündkreises und damit der Zündpille möglich, da die Zündpille im Schaltkreis auf der Sekundärseite angeordnet ist. Da hier durch den Generator eine Schwingung aufgezwungen wird, wird durch die veränderte Impedanz in dem Schwingkreis, der aus dem Widerstand der Kapazität und der Induktivität der Wicklung sowie der transformierten sekundärseitigen Impedanz besteht, die Resonanzkurve des Schwingkreises verändert. Diese Veränderung der Resonanzkurve führt auch zu einer veränderten Spannung, die über dem Widerstand oder dem Kondensator abfällt. Damit ist dann die sekundärseitige Impedanz bestimmbar. Auch hierzu wird dann ein Komparator verwendet, um eine Spannungsänderung zu detektieren.

Zeichnung

Ausführungsbeispiele der Erfindung sind in der Zeichnung dargestellt und werden in der nachfolgenden Beschreibung näher erläutert. Es zeigt

Figur 1 einen induktiven Übertrager, der aus zwei Halbschalen besteht,
Figur 2 eine erste erfindungsgemäße Schaltungsanordnung,
Figur 3 ein Spannungszeitdiagramm,
Figur 4 eine Auswerteschaltung für die Spannung über dem Kondensator,
Figur 5 eine zweite erfindungsgemäße Schaltungsanordnung,
Figur 6 ein Spannungsfrequenzdiagramm und
Figur 7 eine Auswerteschaltung für die Spannung über dem Widerstand.

Beschreibung

Zunehmend werden sogenannte Vans und Offroad-Fahrzeuge mit herausnehmbaren Fahrzeugsitzen beliebter. Da in den Fahrzeugsitzen Elektronik und Elektrik, wie z. B. Rückhaltemittel, eingebaut sind, ist eine Daten- und Energieübertragung zwischen den im Sitz befindlichen Anordnungen und den anderen elektronischen Systemen in der Fahrzeugkarosserie notwendig. Für diese Energie- und Datenübertragung wird ein induktiver Übertrager verwendet. Die Primärseite des Übertragers ist dabei an der Fahrzeugkarosserie und die Sekundärseite im jeweiligen Fahrzeugsitz angeordnet. Dies gilt auch für die folgende Beschreibung. Es wird nun eine Induktivitätsänderung an der Primärseite des Übertragers dazu verwendet, um zu bestimmen, ob der Fahrzeugsitz eingebaut ist oder nicht. Es ist erfindungsgemäß vorgesehen, dass im eingebauten Zustand die an die Primärseite transformierte Impedanz des sekundärseitigen Stromkreises zur Überprüfung der Funktionsfähigkeit der sekundärseitig angeordneten Zündpille oder andere Zündmittel verwendet wird.

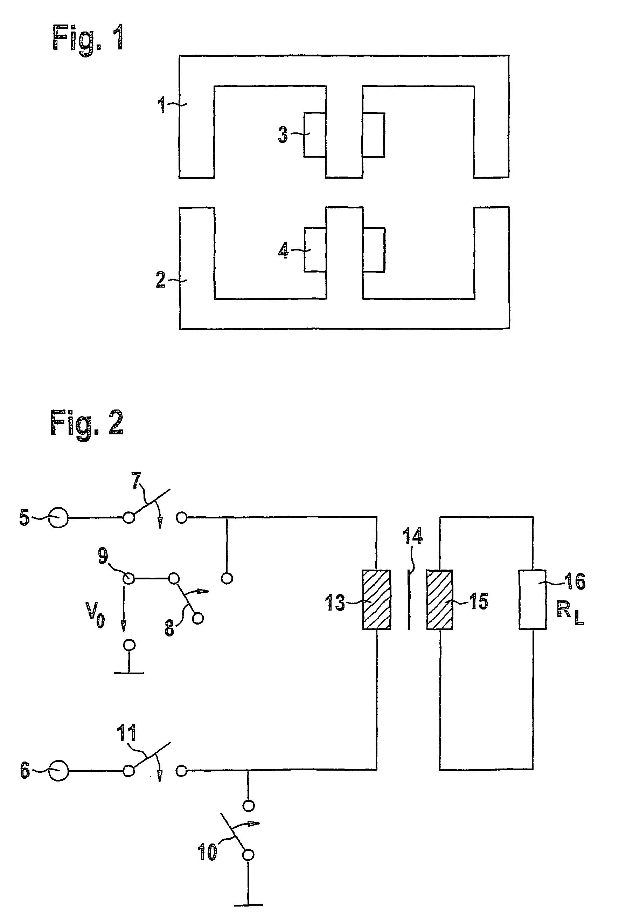

Figur 1 zeigt einen induktiven Übertrager, der eine Primärseite 1 mit einer Wicklung 3 und einer Sekundärseite 2 mit einer Wicklung 4 aufweist. Im eingebauten Zustand sind die Halbschalen 1 und 2 oder Kernhälften bündig aufeinander verbaut. Durch die induktive Kopplung zwischen den Halbschalen 1 und 2 ist an der Wicklung 3 eine andere Induktivität messbar als wenn die Kernhälfte 2 nicht vorhanden ist.

Figur 2 zeigt eine erste Schaltungsanordnung zur Auswertung der Induktivität an der primärseitigen Wicklung oder Spule. Über Elektroden 5 und 6 werden die Energie bzw. die Daten eingespeist, die über eine Wicklung 13, einen Eisenkern 14, der die beiden Kernhälften 1 und 2 aufweist, und eine Wicklung 15 zu der Elektrik im Fahrzeugsitz übertragen, wenn an dem ein Lastwiderstand RL 16 angeschlossen ist. An die Elektrode 5 folgt jedoch direkt ein Schalter 7, der bei der Energie- bzw. Datenübertragung geschlossen ist. Das gleiche gilt für einen Schalter 11, der an die Elektrode 6 angeschlossen ist und auf den die Wicklung 13 folgt. An den Schalter 7 und die Wicklung 13 ist über eine Abzweigung ein Schalter 8 angeschlossen. Dieser Schalter 8 verbindet entweder die Abzweigung oder eine Spannung V0 über eine Elektrode 9 mit einem Kondensator 12, der gegen Masse geschaltet ist. Über den Kondensator 12 wird die Spannung Vc gemessen. Der Schalter 8 ist im Normalbetrieb so geschaltet, dass er die Spannung V0 an den Kondensator 12 schaltet.

Über eine weitere Abzweigung, ausgehend von der Leitung zwischen dem Schalter 11 und der Wicklung 13, ist ein Schalter 10 gegen Masse geschaltet. Der Schalter 10 ist im Normalbetrieb geöffnet und bei der Messung der Induktivität geschlossen. Bei der Messung der Induktivität sind weiterhin die Schalter 7 und 11 geöffnet und der Schalter 8 verbindet die Wicklung 13 mit dem Kondensator 12. Da der Kondensator 12 auf die Spannung V0 geladen wurde, fällt nun diese Spannung in den Schwingkreis, der aus dem Kondensator 12 und der Wicklung 13 gebildet wird, langsam ab. Dies geschieht in Sinusschwingungen mit einer Frequenz f, die sich aus der Kapazität des Kondensators 12 und der Induktivität der Wicklung 13 berechnet. Dafür wird die Thomsonsche Schwingungsformel verwendet:

$$f = \sqrt{\frac{1}{2 \cdot \pi L C}}$$

Aus dieser Formel wird durch einfache Umformung die Induktivität anhand der bekannten Kapazität des Kondensators 12 und der gemessenen Frequenz f berechnet.

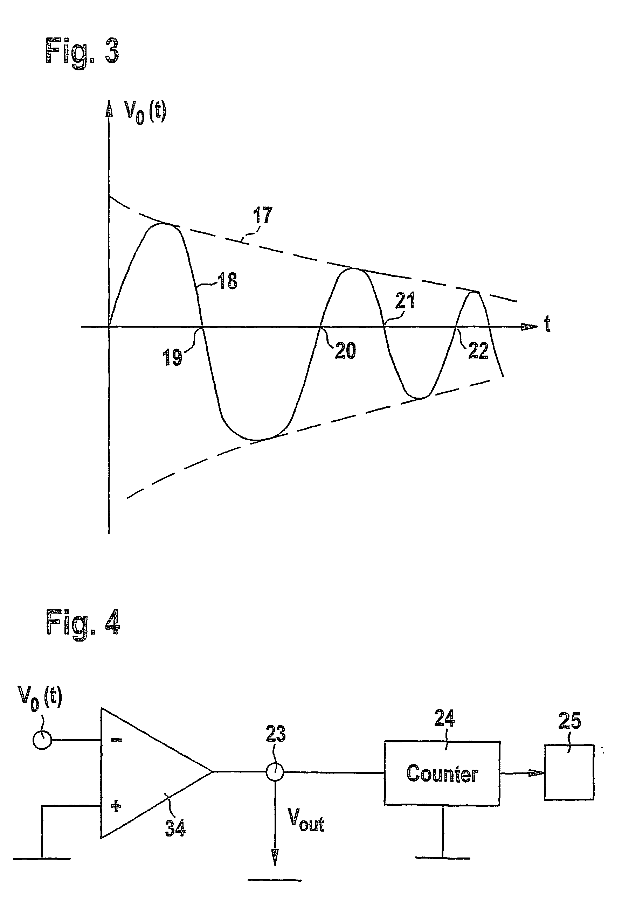

Figur 3 zeigt in einem Spannungszeitdiagramm das Abfallen der Kondensatorspannung Vc in Abhängigkeit von der Zeit. Die Kondensatorspannung 18 klingt hier in Sinusschwingungen ab, da es sich um einen Resonanzkreis handelt. Die Kurve 17, die symmetrisch zur Zeitachse vorhanden ist, zeigt das Abklingverhalten der Kurve 18. Durch Messen der Nullpunktdurchgänge 19, 20, 21 und 22 ist die Periode und damit die Frequenz der Sinusschwingung bestimmbar. Die Kurve 17 wird durch folgende Gleichung beschrieben:

$$V(t) = \frac{V_0}{\omega \cdot LC} e^{\frac{R}{2LC}t}$$

Auch anhand der Amplituden der abklingenden Sinuskurve ist die Induktivität bestimmbar. Dies ist jedoch schwieriger als das Messen der Nullpunktdurchgänge.

Figur 4 zeigt eine solche Auswerteschaltung für das Messen der Nullpunktdurchgänge. Die Spannung Vc, die über dem Kondensator 12 abfällt, wird mit einem Komparator 34 gegen Masse verglichen. In Abhängigkeit davon, ob die Spannung Vc größer oder kleiner 0 ist, gibt der Komparator 34 ein Ausgangssignal $V_{out}$ an der Elektrode 23 ab. Dadurch ist es möglich, ein Rechtecksignal zu generieren, das durch einen Zähler 24 gezählt wird. Aus diesem Zählergebnis kann ein angeschlossener Prozessor 25 dann die Periode bzw. die Frequenz der Sinusschwingung 18 bestimmen. Durch den abgespeicherten Wert für die Kapazität des Kondensators 12 und die berechnete Frequenz der Spannung 18 ist dann die Induktivität der Wicklung 13 bestimmbar. Diese Induktivität wird dann mit einem abgespeicherten Schwellwert verglichen, um zu bestimmen, ob der herausnehmbare Fahrzeugsitz herausgenommen oder eingebaut ist. Dies wird dann beispielsweise einem Airbagsteuergerät übertragen, das bei herausgenommenem Sitz die Rückhaltemittel in dem herausgenommenen Sitz nicht mehr beachtet.

Diese Messung der Induktivität kann periodisch erfolgen, indem die entsprechenden Schalter geschlossen beziehungsweise geöffnet werden.

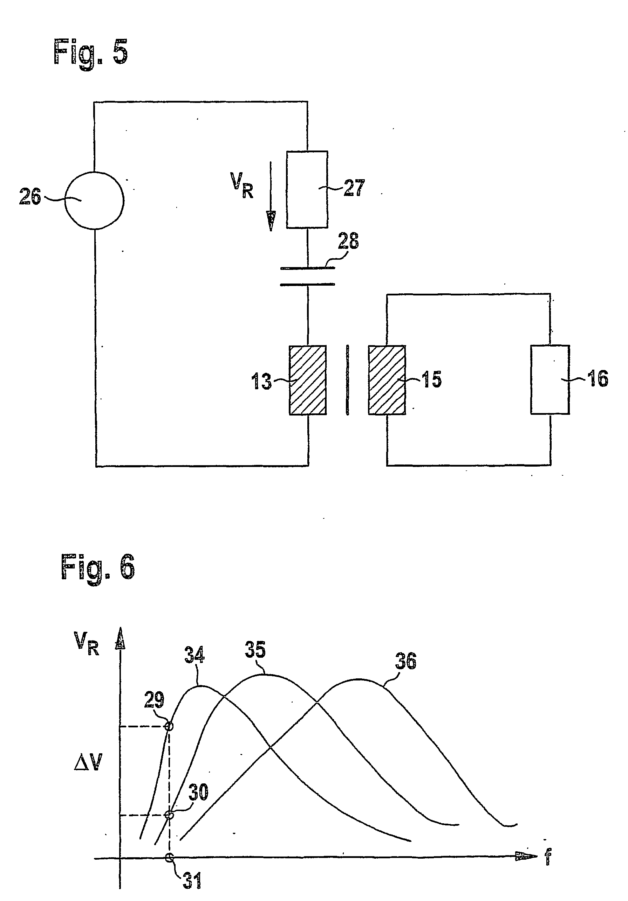

In Figur 5 ist ein zweites Schaltbild einer erfindungsgemäßen Anordnung dargestellt, die zur Bestimmung der sekundärseitigen, zur Primärseite transformierten Impedanz verwendet wird. Damit ist eine Überprüfung der Funktionsfähigkeit des Zündkreises und dabei insbesondere der Zündmittel, also der Zündpille, notwendig. Ein Generator 26 ist an einen Widerstand 27 angeschlossen, der auf seiner anderen Seite wiederum mit einem Kondensator 28 verbunden ist. Der Kondensator 28 ist an die Wicklung 13 angeschlossen, die wiederum an den Generator 26 angeschlossen ist. Die Zuleitungen zur Energie- bzw. Datenquelle sind hier der Einfachheit halber weggelassen. Die Wicklung 13 ist über den Eisenkern wiederum mit der Wicklung 15 auf der Sekundärseite magnetisch gekoppelt. Sekundärseitig ist der Verbraucherwiderstand 16 angeordnet, der die Zündmittel und hier insbesondere die Zündpille darstellt. Der Generator 26 prägt nun eine Sinusschwingung auf den Resonanzkreis, der aus dem Widerstand 27, dem Kondensator 28 und der Wicklung 13 besteht, auf. Dieser Resonanzkreis hat bei der Resonanzfrequenz ein Maximum, da hier der Realteil der Spannung über dem Widerstand 27 oder dem Kondensator 28 maximal real ist. Im Folgenden wird nur die Spannung über dem Widerstand 27 Vr betrachtet.

Figur 6 zeigt ein Spannungsfrequenzdiagramm für die Spannung Vr. Es sind hier drei Resonanzkurven 34, 35 und 36 eingezeichnet, die für unterschiedliche Verbraucherwiderstände 16 gelten. Bei einem vorgegebenen Wert für den Widerstand 16 befinden wir uns auf der Kurve 34 und bei einem davon abweichenden Wert beispielsweise auf der Kurve 35. Da bei einer Frequenz 31 des Generators 26 die Messung durchgeführt wird, sieht man, dass bei dieser Frequenz 31 die Punkte 29 auf der Kurve 34 und 30 auf der Kurve 35 getroffen werden. Zwischen diesen beiden ist eine Spannungsdifferenz ΔV zu messen. Mit dieser Spannungsdifferenz, die der Widerstandsänderung entspricht, ist es möglich, zwischen einer funktionierenden Zündpille und einer voraussichtlich nicht funktionierenden Zündpille zu unterscheiden.

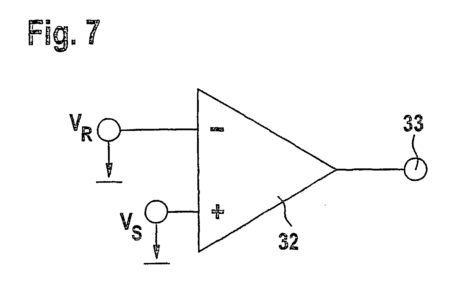

Dazu wird, wie in Figur 7 dargestellt, wiederum ein Komparator 32 verwendet, an dem die Spannung Vr mit einer Referenzspannung Vs verglichen wird. In Abhängigkeit von dem Vergleich gibt der Komparator 32 ein Ausgangssignal 33 ab. Dieses Ausgangssignal kann wiederum gezählt werden oder digitalisiert und von dem Prozessor 25 ausgewertet werden. Der Prozessor 25 bestimmt dann, ob die Zündpille 16 in Ordnung ist oder nicht. In Abhängigkeit davon kann dann die Energie- bzw. Datenversorgung zu dem Übertrager, der aus den Halbschalen 1 und 3 besteht, abgeschaltet werden.

Diese Anordnung zur Bestimmung der Impedanz wird in Kombination mit der Schaltung zur Überwachung der Induktivität verwendet.

**Patentansprüche**

1. Anordnung zur drahtlosen Informations- und/oder Energieübertragung zwischen einem herausnehmbaren Fahrzeugsitz und der Fahrzeugkarosserie, wobei ein induktiver Übertrager mit einer Primärseite (1) in der Fahrzeugkarosserie und einer Sekundärseite (2) in dem herausnehmbaren Sitz zur Informations- und der Energieübertragung angeordnet ist, wobei an der Primärseite (1) Mittel (8, 12, 10, 7, 11) zur Messung einer Induktivität des Übertragers zur Erkennung des herausnehmbaren Fahrzeugsitzes vorhanden sind, **dadurch gekennzeichnet, dass** primärseitig Mittel (26-28) zur Bestimmung einer sekundärseitigen Impedanz vorhanden sind.

2. Anordnung nach Anspruch 1, **dadurch gekennzeichnet, dass** die Mittel zur Messung der Induktivität des Übertragers an einer Wicklung (13) der Primärseite (1) einen Schalter (8) aufweisen, der periodisch geschlossen wird, um einen aufgeladenen Kondensator (12) mit der Wicklung (13) in Reihe zu schalten und dass eine erste Spannung über dem Kondensator (12) bei geschlossenem Schalter (8) in Abhängigkeit von der Zeit gemessen wird, um daraus die Induktivität der Wicklung (13) zu bestimmen.

3. Anordnung nach Anspruch 2, **dadurch gekennzeichnet, dass** Mittel zur Zählung der Nulldurchgänge der ersten Spannung vorhanden sind und dass daraus die Periode der ersten Spannung und damit die Induktivität ermittelt wird, wobei die Induktivität mit einem Schwellwert zur Fahrzeugsitzerkennung verglichen wird.

4. Anordnung nach Anspruch 2, **dadurch gekennzeichnet, dass** die Mittel zur Zählung der Nulldurchgänge wenigstens einen Komparator (34) aufweisen.

5. Anordnung nach Anspruch 1, **dadurch gekennzeichnet, dass** die Mittel zur Messung der Impedanz eines Zündkreises (16) einen Generator (26), einen Widerstand (27) und einen Kondensator (28) aufweisen, wobei der Widerstand (27) und der Kondensator (28) mit der Wicklung (13) der Primärseite (1) in Reihe geschaltet sind und dass eine zweite Spannung über dem Widerstand (27) oder dem Kondensator (28) als Maß für die Impedanz verwendet wird.

6. Anordnung nach Anspruch 5, **dadurch gekennzeichnet, dass** ein Komparator (32) zu einem Vergleich der zweiten Spannung mit einer Referenzspannung vorhanden ist.

**Claims**

1. Arrangement for wire-free information and/or power transmission between a removable vehicle seat and the vehicle bodywork, with an inductive transformer being arranged with a primary (1) in the vehicle bodywork and a secondary (2) in the removable seat for information and power transmission, with means (8, 12, 10, 7, 11) for measurement of the inductance of the transformer in order to identify the removable vehicle seat being provided on the primary (1), **characterized in that** means (26 - 28) for determination of an impedance on the secondary side are provided on the primary side.

2. Arrangement according to Claim 1, **characterized in that** the means for measurement of the inductance of the transmitter have a switch (8) on a winding (13) on the primary (1), which switch (8) is periodically closed in order to connect a charged capacitor (12) in series with the winding (13), and **in that** a first voltage across the capacitor (12) is measured as a function of time with the switch (8) closed, in order to determine the inductance of the winding (13) from this.

3. Arrangement according to Claim 2, **characterized in that** means are provided for counting the zero crossings of the first voltage, and **in that** the period of the first voltage and hence the inductance are determined from this, with the inductance being compared with a threshold value for vehicle seat identification.

4. Arrangement according to Claim 2, **characterized in that** the means for counting the zero crossings have at least one comparator (34).

5. Arrangement according to Claim 1, **characterized in that** the means for measurement of the impedance of an ignition circuit (16) have a generator (26), a resistor (27) and a capacitor (28), with the resistor (27) and the capacitor (28) being connected in series with the winding (13) on the primary (1), and **in that** a second voltage across the resistor (27) or across the capacitor (28) is used as a measure of the impedance.

6. Arrangement according to Claim 5, **characterized in that** a comparator (32) is provided for comparison of the second voltage with a reference voltage.

**Revendications**

1. Système pour la transmission sans fil d'informations et/ou d'énergie entre un siège de véhicule amovible et la carrosserie du véhicule, dans lequel un transmetteur inductif est disposé avec un côté primaire (1) dans la carrosserie du véhicule et un côté secondaire (2) dans le siège amovible pour la transmission d'informations et/ou d'énergie, et avec du côté primaire (1) des moyens (8, 12, 10, 7, 11) pour la mesure d'une inductance du transmetteur en vue de la reconnaissance du siège de véhicule amovible, **caractérisé par** des moyens (26-28) par prévus du côté primaire pour la détermination d'une impédance du côté secondaire.

2. Système selon la revendication 1, **caractérisé en ce que** les moyens pour la mesure de l'inductance du transmetteur présentent, sur un bobinage (13) du côté primaire (1), un interrupteur (8) fermé périodiquement pour raccorder un condensateur chargé (12) en série au bobinage (13), et une première tension aux bornes du condensateur (12) est mesurée en fonction du temps avec l'interrupteur (8) fermé, afin de déterminer à partir de celle-ci l'inductance du bobinage (13).

3. Système selon la revendication 2, **caractérisé en ce que** des moyens de comptage des passages par zéro de la première tension sont prévus, et on en déduit la période de la première tension et de ce fait l'inductance, cette dernière étant comparée à une valeur de seuil pour la reconnaissance du siège de véhicule.

4. Système selon la revendication 2, **caractérisé en ce que** les moyens de comptage des passages par zéro comportent au moins un comparateur (34).

5. Système selon la revendication 1, **caractérisé en ce que** les moyens pour la mesure de l'impédance d'un circuit d'allumage (16) comprennent un générateur (26), une résistance (27) et un condensateur (28), la résistance (27) et le condensateur (28) étant raccordés en série au bobinage (13) du côté primaire (1), et on utilise une deuxième tension aux bornes de la résistance (27) ou du condensateur (28) comme mesure pour l'impédance.

6. Système selon la revendication 5, **caractérisé par** un comparateur (32) pour comparer la deuxième tension à une tension de référence.

**Fig. 1**

**Fig. 2**

Fig. 3

Fig. 4

Fig. 5

Fig. 6

Fig. 7

V_R

V_S

33

32